# EUROPEAN PATENT APPLICATION

(11) **EP 4 797 478 A1**
(43) Date of publication of application: **26.08.2026**
(21) Application number: 25158728.3
(22) Date of filing: 19.02.2025
(51) Int. Cl.: H02J 3/12, C25B 1/04, C25B 15/02, H02J 3/30, H02J 4/00

(54) **CONTROLLING OF AN ELECTROLYZING PLANT**

(71) Applicant: Siemens Energy Global GmbH & Co. KG, 81739 München (DE)
(72) Inventor: Loku, Fisnik, 90439 Nürnberg (DE); Craciun, Bogdan, 91052 Erlangen (DE); Bendig, Marvin, 90513 Zirndorf (DE); Schumann, Sven, 91452 Wilhermsdorf (DE)

(57) **Abstract**

The invention relates to a method of controlling an electrolyzing plant (10) having plural electrolyzing cells (14) providing an electrolyzing process in response to being subjected to a DC electrolyzing power, wherein the electrolyzing plant is supplied with electric power from an electric power network (12) deploying an alternating voltage having a basic frequency, wherein an AC side (22) of an electric converter (20) is connected with the electric power network, a DC side (24) of the electric converter (20) provides the DC electrolyzing power. A synchronous machine (30) has a stator winding being connected with the electric power network, wherein a rotational speed of a rotor (28) of the synchronous machine is detected by a speed sensor (26) that provides a sensor signal (34), wherein a control device (36) receives and processes the sensor signal and controls an operation of the electric converter dependent on the processed sensor signal.

## Description

The invention relates to a method of controlling an electrolyzing plant having plural electrolyzing cells, especially configured to electrolyze water by providing an electrolyzing process, wherein the electrolyzing cells perform the electrolyzing process in response to being subjected to a DC electrolyzing power, wherein the electrolyzing plant is supplied with electric power from an electric power network, wherein the electric power network deploys an alternating voltage having a basic frequency, wherein an AC side of at least one electric converter of the electrolyzing plant is electrically connected with the electric power network in order to receive the electric power, and a DC side of at least one electric converter provides the DC electrolyzing power in response to the AC side receiving the electric power. The invention also relates to an electrolyzing plant having plural electrolyzing cells, especially configured to electrolyze water by providing an electrolyzing process, wherein the electrolyzing cells perform the electrolyzing process in response to be subjected to a DC electrolyzing power, a point of connection configured to be connected with an electric power network in order to supply the electrolyzing plant with electric power from the electric power network, wherein the electric power network deploys an alternating voltage having a basic frequency, at least one electric converter having an AC side electrically connected with the point of connection, in order to receive the electric power from the electric power network, and a DC side connected with the electrolyzing cells, wherein the DC side is configured to provide the electrolyzing cells with the DC electrolyzing power in response to the AC side receiving the electric power.

Methods of controlling electrolyzing plants, for instance, for producing hydrogen and oxygen by electrolyzing of water in an electrolyzing process, and electrolyzing plants are well known in the state of the art, which is why specific references about the state of the art need not to be cited. The invention relates to objects providing an electrolyzing process, which are used, for example, for producing hydrogen and oxygen by electrolyzing of water. The following considerations can be also applied to such electrolyzing processes, respectively.

Electrolysis itself is provided by the plural electrolyzing cells. A group of the electrolyzing cells may be arranged such as to form an electrolyzing module. One or more electrolyzing modules may form an electrolyzing device.

The electrolyzing cells perform the electrolyzing process in response to being subjected to a DC electrolyzing power. The electrolyzing cells may be arranged at least partially as a stack. The DC electrolyzing power may be deployed by a DC electrolyzing voltage and a DC electrolyzing current. Especially, when the electrolyzing cells are arranged in one or more stacks, a specific stack may be subjected to the electrolyzing power. The electrolyzing cells may be electrically connected at least partially in series and/or in parallel. An electric connection of the electrolyzing cells may be provided such that at least some, or perhaps all, of the electrolyzing cells are subjected to a respective portion of a DC voltage or the DC electrolyzing voltage, respectively, subjected to the electrolyzing device. The operation of generic electrolyzing cells as well as the stack, for instance, for the use of electrolyzing of water, are well-known to those skilled in the art, such as, for instance, disclosed by DE 197 29 529 C1. The generic function of electrolysis, especially electrolysis of water, is also well known to those skilled in the art, which is why it is refrained from further detailed explanation in this specification.

During the electrolyzing process, when the electrolyzing cells are subjected to the suited DC electrolyzing power, especially the DC electrolyzing voltage, the electrolyzing cells respond with the DC electrolyzing current flow. Especially with regard to the electrolyzing of water, during the electrolyzing process, water is consumed, and hydrogen and oxygen are produced. A value of the DC electrolyzing voltage usually may depend on the number of electrolyzing cells being connected in series inside of the at least one stack. Generally, the electrolyzing cells of one stack are usually connected in series. Therefore, the DC current flow may depend on the applied DC voltage and the characteristics of the electrolyzing cells such as, for instance, electrical resistance, electrical impedance, aging and/or the like, of the series-connected electrolyzing cells. However, in some exemplary embodiments having a different design, the electrolyzing DC current flow may also depend on a number of electrolyzing cells being connected in parallel if applicable and/or a specific design of each of the electrolyzing cells.

Usually, an electrolyzing plant requires a respective high-power power supply during the electrolyzing process. For this purpose, the electrolyzing plant may have a point of connection (PoC), wherein, at the point of connection, the electrolyzing plant is electrically connected with the electric power network. It should be noted that the conditions for establishing the electrolyzing process by the electrolyzing cells of the electrolyzing plant are not easy to manage which is why it is usually an intention of an operator of the electrolyzing plant to maintain a specific processing condition and to avoid large amendments of this condition. Therefore, controlling the electrolyzing process of the electrolyzing cells in order to support stability of the electric power network should consider these requirements for supplying the electrolyzing plant with electric energy, on the one hand. Controlling can also be at least partially provided by a respective apparatus of the electrolyzing plant. On the other hand, network requirements of the electric power network also need to be considered, such as, for example, harmonics, power factor, low voltage condition, high voltage condition, frequency deviation, and/or the like.

The electrolyzing plant may have an internal power network, which is connected with the point of connection. Especially, the internal power network may receive electric energy from the electric power network and transmit the electric energy at least to the electrolyzing cells. In this regard, it should be noted that the electrolyzing plant, especially the internal power network, usually has at least one electric converter, for instance, a rectifying device, providing an electrical coupling between the point of connection, in turn connected with the electric power network, and the electrolyzing cells. The electrolyzing cells need to be supplied with DC voltage, whereas, usually, the electric power network provides an AC voltage, especially, a three-phase AC voltage. Therefore, the electrolyzing plant has at least one electric converter, which receives the AC voltage and, in response, provides the DC electrolyzing voltage, or DC electrolyzing power, respectively.

For the purpose of rectifying as such, the electric converter may be of the line-commutated type which may have switching elements such as, for example, thyristors, diodes and/or the like, or the electric converter may be of the self-commutated type which may have transistors as switching elements such as, for example, insulated gate bipolar transistors (IGBT), field effect transistors (FET) such as, for instance, metal oxide semiconductor field effect transistors (MOSFET), and/or the like, respectively. The switching elements can be controlled by a control apparatus of the electric converter, in order to adjust a specific electric power to be supplied to the electrolyzing cells. The control apparatus can be in communication with the apparatus for controlling the electrolyzing plant.

It should be further considered that the number of installed electrolyzing plants and existing electric power networks continuously increases. With regard to the global warming range, it is preferred to accelerate the production of green hydrogen. Simultaneously, the share of power electronic based units like renewable energy systems also increases leading to a decrease in grid stability. Consequently, electric power network operators or transmission system operators (TSO), respectively, consider defining requirements for the connection of large scale electrolyzing plants in an existing electric power network, in order to ensure a stable grid operation.

Usually, the electrolyzing plant requires a high power consumption, for instance, causing an AC current of the electric power network in a range of about single-digit kA through about low double-digit kA. The situation may become even more serious when considering a trend that most of the countries of the world are replacing existing conventional power plants by renewable energy sources, which further decreases a strength and a stability of the electric power network.

In case of system perturbations of the electric power network, such as, for instance, a voltage drop, a brownout, an overvoltage condition, a frequency deviation, or the like, supporting capabilities for stabilizing the electric power network by photovoltaic farms, wind farms and/or the like may not be sufficient to ensure a stable operation of the electric power network. In this regard, it is considered to provide new requirements for electrolyzing plants.

Moreover, large flexible loads connected to the electric power network, or grid, respectively, in particular electrolyzing plants, may cause a substantial effect on the security and/or stability of the operation of the power supply network, especially, in case that the operation of the electrolyzing plant be not flexible with requirements regarding the operation of the power supply network. For example, during a power supply network fault caused by different reasons, the alternating voltage and/or its basic frequency may differ from a rated value. However, the electrolyzing plant shall stay connected and permanent disconnection shall be avoided. Additionally, grid stabilizing measures shall be performed by the electrolyzing plant.

Connecting large electrolyzing plants to a public grid may require compliance with the fulfillment of the local grid code requirements. Part of these requirements - especially for large scale electrolyzing plants - is the support of the grid stability in case a predefined tolerable frequency band is left by under-frequency or over-frequency. Such deviations may be caused by an imbalance in the grid between generation of electric power and an electric load. However, important requirements, especially, with regard to the frequency of the alternating voltage of the electric power network will not be sufficiently considered.

Considering the issues above, the electric power network operators commence defining requirements for the connection of large scale electrolysis plants in existing power networks. Initial specifications and requirements such as the rate-of-change-of-frequency (RoCoF), withstand capability, or the provision of the instantaneous reserve (the so-called "Momentanreserve") are defined.

In this regard, it is an object of the invention to provide a method and an electrolyzing plant, which may further support stable and reliable operation of the electric power network, especially, with regard to the basic frequency of the alternating voltage of the electric power network. It is especially an object to improve stable operation of the electric power network with regard to LFSM-U, and LFSM-O functionalities.

As a solution, a method, and an electrolyzing plant according to the independent claims are proposed.

Further exemplary embodiments can be derived from the features of the dependent claims.

With regard to a generic method, it is especially proposed that a synchronous machine of the electrolyzing plant has a stator winding, wherein the stator winding is connected with the electric power network, wherein a rotational speed of a rotor of the synchronous machine is detected by a speed sensor that provides a sensor signal depending on the detected rotational speed, wherein a control device that controls at least an operation of the at least one electric converter, receives and processes the sensor signal, and the DC electrolyzing power provided by the at least one electric converter is controlled at least dependent on the processed sensor signal, in order to control the electrolyzing plant.

With regard to a generic electrolyzing plant, it is especially proposed that the electrolyzing plant has a synchronous machine having a stator winding and a rotor, wherein the stator winding is connected with the point of connection, a speed sensor configured to detect a rotational speed of the rotor of the synchronous machine, wherein the speed sensor is configured to provide a sensor signal depending on the detected rotational speed, and a control device connected with the speed sensor, wherein the control device is configured to receive and process the sensor signal and to control an operation of the at least one electric converter such that the DC electrolyzing power provided by the at least one electric converter is controlled at least partially dependent on the processed sensor signal, in order to control the electrolyzing plant.

Among others, the invention considers that using a synchronous machine allows receiving an actual information about important electric power network parameters, especially, with regard to the frequency of the alternating voltage used by the electric power network and/or its phase. An undesired condition of the electric power network, such as over-frequency, under-frequency, and the like, can be detected immediately by detecting a rotational speed of the rotor of the synchronous machine. The speed sensor provides respective a sensor signal depending on the rotational speed, wherein the sensor signal can be directly used to control power conversion by the at least one electric converter. Consequently, in an event of over-frequency, the senor signal may cause the control device controlling power conversion of the at least one electric converter to increase the converted power. However, in an event of under-frequency, the senor signal may cause the control device controlling power conversion of the at least one electric converter to decrease the converted power. Anyway, the invention allows achieving a very fast reaction with a high power so that it is possible to counteract, especially, with a high power, the undesired condition of the electric power network. A stable and reliable operation of the electric power network can be supported.

It should be further noted that events of undesired frequency deviation with regard to a rated value of the frequency and/or the phase may last for a relative short time period in many cases. Such a time period may extend over several seconds, or slightly more, for instance, up to a few minutes. Hence, it is required to act very fast in order to achieve sufficient support of the electric power network. An additional consideration is that the power consumption of the electrolyzing plant may be substantially affected by the electrolyzing process established in the electrolyzing cells. Consequently, the electric power consumed by the at least one converter may mainly ascertain the over-all power consumption of the whole electrolyzing plant. Further considering that the at least one electric converter may be usually designed to enable a continuous high-power supply of the electrolyzing cells, a short high-power impulse may be possible in order to support the electric power network in the before-mentioned event. At the same time, disadvantageous effects on the electrolyzing process and the electrolyzing cells can be kept small or avoided. Therefore, the inventive concept provides additional equipment that allows acting on the at least one electric converter. In this regard, the invention proposes to use a combination of the synchronous machine and the speed sensor such as to form a frequency and/or phase detector. The speed sensor responds with a sensor signal indicative for the current frequency and/or phase of the alternating voltage, which acts on the stator winding of the synchronous machine. As the stator winding is connected with the point of connection, this design allows detecting the frequency and/or phase of the alternating voltage of the electric power network. This sensor signal may act directly on the at least one electric converter so that a direct and unambiguous reaction can be provided in order to support the electric power network in stabilizing the frequency and/or the phase of its alternating voltage. A very fast reaction can be achieved, for example, faster than one second.

In this regard it should be noted that an intrinsic, undelayed power reserve of the rotating masses of conventional power plants synchronously connected to the grid forms an instantaneous reserve (MR). Moreover, several transmission system operators such as Amprion in Germany state that, due to its intrinsic character, the instantaneous reserve must be fundamentally distinguished from fast control power types such as "fast frequency response" or control power that is activated proportionally to the rate of frequency change. These different types of controlling power have been under discussion for some time. They are sometimes referred to as "emulated inertia" and, therefore, are sometimes regarded as supposed alternatives to instantaneous reserve. On the one hand, the frequency must first be measured for these types of control power so that the change in active power is not instantaneous. On the other hand, the amount of activated instantaneous reserve power corresponds to the imbalance of the active power balance at all times due to the physical relationships, which is not the case with control power. Therefore, a fast controlling of the power cannot replace instantaneous reserve power, not even proportionally (translated from German; source: Amprion, "MARKTGESTÜTZTE BESCHAFFUNG VON MOMENTANRESERVE", March 2023).

Considering the finding above, it can be concluded that the instantaneous reserve for systems lacking large rotating masses can be provided by converter-based systems acting as grid forming systems, thereby emulating the conventional power plants. However, this assumes that one side of the grid-forming converters consist of power input, as it would be the case for the conventional power plant or energy storage systems. The electrolysis systems or electrolyzing plants, respectively, are however loads and are lacking this equivalent power input to the corresponding converter stations.

Similarly, regarding renewable energy sources or battery energy storage systems, grid-forming converter-based systems for electrolysis systems can defined as a prerequisite condition for requirements that are discussed above. It may be a reason that the grid-forming converter system can be designed to emulate an equivalent inertia that normally results from the conventional power plants. In this regard, the German TSO Amprion states that, with synchronous machines, there can be a physical relationship between the instantaneous reserve power, the instantaneous reserve energy, and the inertia referring to a start-up time constant. This relationship may result from physical variables such as design, moment of inertia, rated power, and the like of rotating components of a turbine set such as a synchronous machine, and a turbine. Therefore, the instantaneous reserve power provided by the synchronous machines may substantially dependent on component sizes, which are usually fixed, and disturbances in the grid such as power imbalance, frequency gradient, and the like.

In contrast, grid-forming converter control concepts may be exclusively control-based. Here, the inertia - and thus the provision of instantaneous reserve power - can be freely parameterized within the operating limits of the converter, especially, a current limitation. However, the provision of instantaneous reserve power has repercussions on an upstream power generation system such as, for instance, a battery storage, a wind turbine, a photo voltaic system, and the like, which can also change its system status. Therefore, it is usually not sufficient to simply make appropriate changes to the converter, but also to adapt or redesign the system control concept (translated from German; source: Amprion, "MARKTGESTÜTZTE BESCHAFFUNG VON MOMENTANRESERVE", March 2023).

Generally, the invention is not limited to electrolysis systems or electrolyzing plants, respectively, only, as the electrolysis systems require a direct control of the DC electrolyzing current, which is needed for the electrolyzing process itself. A solution, where an electric converter can be in grid-forming control model and simultaneously actively and/or directly control the DC electrolyzing current or the electrolyzing power, respectively, does not exist, as based on the available current technologies or control concepts, it is not possible.

Hence, the invention teaches a synchronous machine of the electrolyzing plant having a stator winding, wherein the stator winding is connected with the electric power network. Consequently, the stator winding may be connected with the point of connection so that the stator winding may be connected with the at least one electric converter in parallel. The stator winding and the at least one electric converter may be subjected to the same alternating voltage provided by the electric power network. The invention considers that the speed of the rotor of the synchronous machine corresponds unambiguously and directly with the current frequency of the alternating voltage of the electric power network. Consequently, the rotational speed of the rotor of the synchronous machine is detected by a speed sensor that provides a sensor signal depending on the detected rotational speed. The sensor signal can be an analogous or a digital sensor signal. A control device that controls at least an operation of the at least one electric converter, receives and processes the sensor signal. The control device may comprise at least one hardware circuitry and/or at least one data processing device.

The control device controls at least the operation of the at least one electric converter. In this regard, the control device controls the DC electrolyzing power provided by the at least one electric converter such that a value of the DC electrolyzing power is adjusted at least dependent on the processed sensor signal. So, the electrolyzing plant can be controlled with regard to its power consumption for instance, in order to support stability of the electric power network with regard to the frequency of the alternating voltage. The direct control of the consumed power dependent on the detected speed of the rotor allows an unambiguous reaction of the electrolyzing plant in response to frequency variations. This allows ensuring that any abnormal situation in the electric power network is instantaneously translated into a respective mechanical speed of the rotor of the synchronous machine and, therefore, into a corresponding change of the sensor signal, which may be considered at least partially by a reference value of the control device, ensuring an instantaneous response as desired by various TSOs. The control device may be integral with a control apparatus controlling the at least one electric converter.

In particular, the data processing device may include one or more computers, one or more microcontrollers, and/or one or more integrated circuits, for example, one or more application-specific integrated circuits, ASIC, one or more field-programmable gate arrays, FPGA, and/or one or more systems-on-a-chip, SoC. A data processing device may also include one or more processors, for example one or more microprocessors, one or more central processing units, CPU, one or more graphics processing units, GPU, and/or one or more signal processors, in particular one or more digital signal processors, DSP. The data processing device may also include a physical or a virtual cluster of computers or other of said devices. A data processing device may also comprise one or more hardware and/or software interfaces, for example for receiving and/or providing data, respectively.

The data processing device may also comprise one or more memory devices. A memory device may be implemented as a volatile memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM. According to a further aspect of the invention, a computer program comprising instructions may be provided. When the instructions are executed by a data processing system, the instructions cause the data processing system to carry out a computer-implemented method according to the invention. The instructions may be provided as program code. The program code can, for example, be provided as binary code or assembler and/or as source code of a programming language such as for example C, and/or as a program script such as, for example, Python. A computer-readable storage medium storing the computer program may be provided.

The synchronous machine may be operated without any mechanical load, especially, the rotor being not connected with any other further mechanical rotatable object than, for instance, the speed sensor. This supports that the rotational speed of the rotor substantially corresponds to situation of the alternating voltage subjected to the stator winding, especially, the frequency and/or any phase variation. The synchronous machine can by separately excited or permanently excited, for example, by use of permanent magnets or the like. The stator winding is designed to conform to the alternating voltage, especially, with regard to any number of phases of the alternating voltage. In an exemplary embodiment, number of phases of the alternating voltage may be three or more than three. The synchronous machine may be designed to have one or more pole pairs or terminal pairs, respectively.

The at least one electric converter may be a static converter without any rotating mechanical parts. The at least one electric converter may have one or more switching elements which are operated to convert the electric power supplied at the AC side to electric power provided at the DC side. An operation of the at least one switching element may be controlled by the control device. The at least one switching element may be an electronic switching element, which may allow providing at least two switching statuses, wherein each of the switching statuses are engaged with a value of a respective switching signal provided by the control device. Generally, the may be provided more than only one electric converter. The electric converters may be controlled by the control device. Moreover, the electric converters may be connected in parallel. The electric converters need not be identical, especially, with regard to their rated values such as a rated power, and the like. In an exemplary embodiment, the electric converters are substantially designed identical. Especially, the AC sides of the electric converters may be connected in parallel. Moreover, the DC sides of the electric converters may be connected in parallel. The at least one electric converter may be controlled by the control apparatus. However, the at least one electric converter may be controlled by the control device, especially when the control apparatus is integral with the control device.

Generally, there may be provided more than only one electric converter. The electric converters may be controlled by the control device. Moreover, the electric converters may be connected in parallel. The electric converters need not be identical, especially, with regard to their rated values such as a rated power, and the like. In an exemplary embodiment, the electric converters are substantially designed identical. Especially, the AC sides of the electric converters may be connected in parallel. Moreover, the DC sides of the electric converters may be connected in parallel. The at least one electric converter may be controlled by the control device. However, the at least one electric converter may be controlled by a control device of the electrolyzing plant, especially, when the control device is integral with the control device of the electrolyzing plant.

In this regard, the invention can be easily implemented or retrofit in an existing electrolyzing plant. The control device and/or the control apparatus needs to be adapted only with regard to considering the sensor signal when determining a control signal for the at least one electric converter.

According to an exemplary embodiment, it is proposed that connecting the stator winding with the electric power network is established by connecting in parallel the stator winding and the AC side of the at least one electric converter. Moreover, it is proposed in that the at least one electric converter and the stator winding of the synchronous machine are electrically connected in parallel. As the AC side of the at least one electric converter is connected with the point of connection, the network parameter, especially, the frequency, is available at the AC side of the at least one electric converter. Consequently, a simple link with the synchronous machine can be achieved so that the operation of the synchronous machine corresponds the current network parameter, especially, a rotation of its rotor depends straight on the frequency of the alternating voltage.

According to another exemplary embodiment, it is proposed that the at least one electric converter has thyristors for providing a rectifying operation, wherein firing angles of the thyristors are determined at least partially dependent on the sensor signal of the speed sensor. The firing angles may form the control signal. In this regard, a direct reaction of the power conversion of the at least one electric converter can be achieved. The sensor signal may act on the control device, especially, a portion of the control device, which specifies the firing angles. No further processing may be necessary.

According to yet another exemplary embodiment, it is proposed that the at least one electric converter has transistors for providing the rectifying operation, wherein the transistors are operated in a specific PWM-mode, wherein the PWM-mode is determined at least partially dependent on the sensor signal of the speed sensor. The PWM-mode (pulse width modulation) determines control signals for the transistors and allows controlling transistors with regard to their switching statuses such that a value of the converted power can be controlled. In this regard, the PWM-mode may form the control signal. The sensor signal may act on the control device, especially, a portion of the control device, which specifies the specific PWM-mode. So, the specific PWM-mode can be varied depending on the sensor signal. A direct reaction of the at least one electric converter with regard to the converted power can be achieved. No further processing may be necessary.

According to another exemplary embodiment, it is proposed that the synchronous machine has a number of pole pairs of at least two. The invention may also be applied by using a synchronous machine having more than only one pole pair or terminal pair, respectively. The speed sensor may be adapted correspondingly. The rotor may be designed correspondingly.

According to yet another exemplary embodiment, it is proposed that the electrolyzing plant comprises a transformer having a primary winding and a secondary winding, wherein the primary winding is connected with the electric power network, wherein the secondary winding is connected with the at least one electric converter and the stator winding of the synchronous machine. This allows transforming the alternating voltage of the electric power network at the point of connection to a value that may be well suited to be used by the AC side of the at least one electric converter. This may be also advantageous when the stator winding of the synchronous machine be connected with the secondary winding of the transformer. Especially, the frequency information may be maintained independent from transformation of the alternating voltage by the transformer. However, in alternating embodiments, the stator winding of the synchronous machine may be connected with the primary winding of the transformer, wherein the AC side of the at least one converter may be connected with the secondary winding of the transformer. This may not substantially affect the inventive concept.

According to another exemplary embodiment, it is proposed that the control device is formed integral with the at least one electric converter. Frequency information may be immediately available in the control device. Without substantial processing of the sensor signal, the control device may directly act on the electric converter. A fast reaction without substantial delay may be possible.

According to yet another exemplary embodiment, it is proposed that the electrolyzing plant comprises an operating device configured to supply the electrolyzing cells with an agent to be electrolyzed and to discharge at least one product produced in response to electrolyzing the agent, wherein the operating device is configured to control supplying and discharging at least partially dependent on the sensor signal. In this regard, supply of the electrolyzing cells with the agent and discharge of the product can be adapted if the converted power varies. However, the operating device may react with a predetermined time delay upon variation the converted power. The operating device may be at least in communication with the control device.

For use cases or use situations which may appear in a method according to the invention and which are not explicitly described herein, it may be provided that, in accordance with the method, an error message and/or a prompt for user feedback is output and/or a default setting and/or a predetermined initial state is set. Especially, in applications or situations which might be possible but which are not specified specifically, it may be provided that a failure signal and/or a request for inputting a user confirmation can be output and/or a standard configuration and/or a predefined initial status can be suspended.

Advantages and effects of the inventive method also apply to the inventive electrolyzing plant and vice versa. Therefore, method features may also be expressed as apparatus features and vice versa.

The teaching of the present invention can be readily understood and at least some additional specific details will appear by considering the following detailed description of some exemplary embodiments in conjunction with the accompanying drawings. In the drawings, same reference characters correspond to same components and functions. In the drawings, it is shown:
FIG 1 a schematic block diagram showing an electrolyzing plant, wherein a synchronous machine is provided to control power conversion of an electric converter of the electrolyzing plant;
FIG 2 a schematic diagram showing a first control scheme for a control device of the electric converter of FIG 1; and
FIG 3 a schematic diagram showing a second control scheme for a control device of the electric converter of FIG 1.

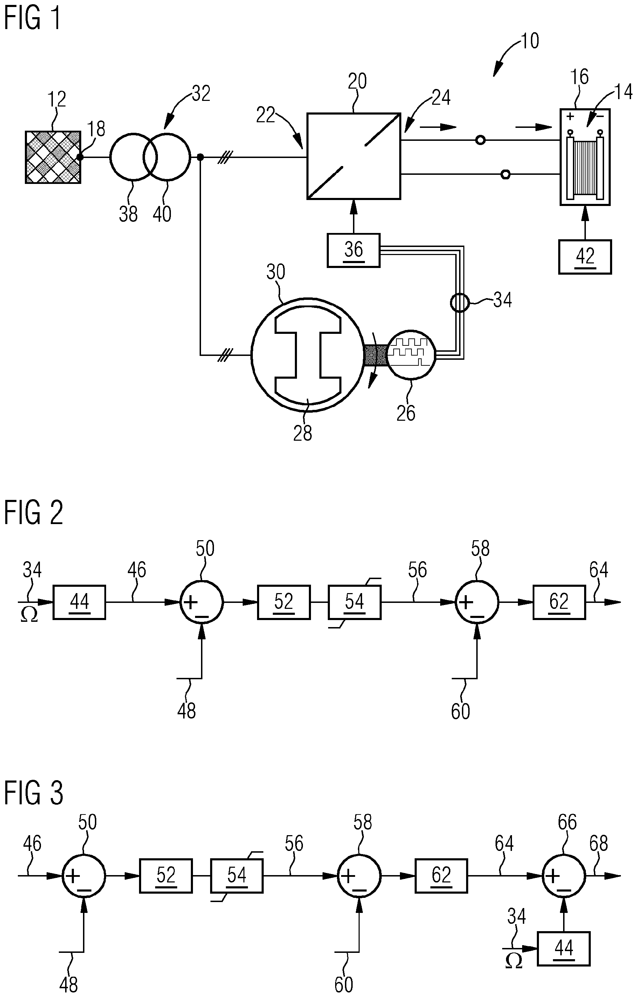

FIG. 1 shows a schematic block diagram showing an electrolyzing plant 10. The electrolyzing plant 10 has plural electrolyzing cells 14, which are arranged in a stack 16. The electrolyzing cells 14 are configured to electrolyze water by providing an electrolyzing process. The electrolyzing process is performed by the electrolyzing cells 14 in response to being subjected to a DC electrolyzing power.

The electrolyzing plant 10 also has a point of connection 18, which is configured to be connected with an electric power network 12 in order to supply the electrolyzing plant 10 with electric power from the electric power network 12. The electric power network 12 deploys an alternating voltage having a basic frequency. The alternating voltage is a three-phase voltage in the present embodiment. In the present embodiment, the basic frequency has a rated value of 50 Hz. In alternative embodiments, the basic frequency may have a rated value of 60 Hz, 400 Hz, or the like.

The electrolyzing plant 10 further comprises an electric converter 20 having an AC side 22 electrically connected with the point of connection 18, in order to receive the electric power from the electric power network 12. Moreover, the converter 20 has a DC side 24 connected with the electrolyzing cells 14, wherein the DC side 24 is configured to provide the electrolyzing cells 14 with the DC electrolyzing power in response to the AC side 22 receiving the electric power. At the DC side 24, the electric converter 20 provides a DC electrolyzing voltage and a DC electrolyzing current. The DC electrolyzing voltage is selected such that the stack 16 of the electrolyzing cells 14 can be subjected to the electrolyzing voltage so that each of its electrolyzing cells 14 is subjected to a respective portion of the DC electrolyzing voltage, in order to provide a proper electrolyzing. In the stack 16, the electrolyzing cells 14 are electrically arranged in series. Therefore, in this embodiment, each of the electrolyzing cells 14 is subjected to the same DC electrolyzing current.

Moreover, the electrolyzing plant 10 has an operating device 42, which is configured to supply the electrolyzing cells 14 with an agent to be electrolyzed, which is in the present embodiment formed by water. Moreover, the operating device 42 is configured to discharge the products produced in response to electrolyzing the water, which is in the present embodiment hydrogen and oxygen. The operating device 42 may comprise respective piping in order to allow supplying and discharging. The operating device 42 may further comprise heating and/or cooling apparatuses, additional sensor apparatuses and/or the like in order to provide a proper operation of the stack 16 of the electrolyzing cells 14.

The electrolyzing plant 10 has a transformer 32 establishing the connection between the AC side 22 of the electric converter 20 and the point of connection 18. In this regard, the transformer 32 has a primary winding 38 and a secondary winding 40. The windings 38, 40 are designed as a three-phase winding in order to be subjected to a three-phase alternating voltage of the electric power network 12. The primary winding 38 is connected with the point of connection 18. The secondary winding 40 is connected with the electric converter 20. So, the electric converter 20 can be subjected to a transformed voltage, which is adapted to a rated configuration of the electric converter 20.

During a current established electrolyzing process, the electric converter 20 receives electric power from the electric power network 12 via the point of connection 18 and the transformer 32. The electric converter 20 converts the electric power to an electric power using the DC electrolyzing voltage and the DC electrolyzing current. This is provided at the DC side 24 of the electric converter 20. So, the electrolyzing cells 14 of the stack 16 can be supplied with electric energy in order to allow the electrolyzing process.

The electrolyzing plant 10 further comprises a synchronous machine 30 having a stator winding and a rotor 28. The stator winding is also designed as a three-phase winding, which is connected to the secondary winding 40 of the transformer 32 so that the AC side 22 of the electric converter 20 and the stator winding of the synchronous machine 30 are connected in parallel. As well known to those skilled in the art, rotation of the rotor 28 corresponds to the frequency of the alternating voltage subjected to the stator winding. In the present embodiment, the rotor 28 has one pole pair or terminal pair, respectively.

Moreover, the electrolyzing plant 10 comprises a speed sensor 26 configured to detect a rotational speed of the rotor 28 of the synchronous machine 30. The speed sensor 26 is configured to provide a sensor signal 34 depending on the detected rotational speed. In this regard, the sensor signal 34 corresponds to the frequency of the alternating voltage subjected to the stator winding, which in turn corresponds to the frequency of the alternating voltage provided by the electric power network 12.

The electrolyzing plant 10 further comprises a control device 36 connected with the speed sensor 26. The control device 36 may be integral with the electric converter 20. The control device 36 is configured to receive and process the sensor signal 34. Moreover, the control device 36 is configured to control an operation of the electric converter 20 such that the DC electrolyzing power provided by the electric converter 20 is controlled dependent on the sensor signal 34. This allows controlling the electrolyzing plant 10 with regard to its power consumption.

In the present embodiment, the electric converter 20 has thyristors for providing a rectifying operation in order to convert the electric power. As well known to those scaled in the art, the thyristors are controlled by firing impulses. The firing impulses are allocated to a current phase situation of the alternating voltage received at the AC side 22. In order to allow a fast reaction upon a frequency deviation of the alternating voltage of the electric power network 12, the control device 36 determines the firing angles of the thyristors dependent on the sensor signal 34 of the speed sensor 26. In this regard, a fast reaction of the electrolyzing plant with regard to its power consumption can be achieved without substantial time delay in order to react directly on an undesired frequency variation with regard to over-frequency and/or under-frequency. So, if the frequency rises with regard to a rated frequency value, the rotational speed of rotor 28 increases, which can be detected by the speed sensor 26, in turn, providing the sensor signal 34. The sensor signal 34 can directly act on a component of the control device 36, which determines the firing angles. This allows shifting the firing angles such that additional power can be consumed by the electrolyzing plant 10. On the other hand, if the frequency decreases, a respective reaction can be achieved because the rotational speed of the rotor 28 decreases, which will be also detected by the speed sensor 26, and the respective sensor signal 34 causes the control device 36 to shift the firing angles such that the consumed power will be reduced. So, the inventive concept allows supporting stability and reliability of the electric power network 12.

Any change with regard to the frequency of the alternating voltage of the electric power network 12 or with regard to its phase, respectively, results in an angular speed change of the rotor 28 as there is a direct and instantaneous coupling between these two components. This coupling between any abnormal network change with regard to a frequency and/or phase and the angular or rotating speed of the synchronous machine 30 enables provision of the instantaneous reserve for generation units.

Summarized, a primary goal of the invention is the control of the DC electrolyzing current or DC electrolyzing power, respectively, so that a controlled operation of the electrolyzing process can be substantially guaranteed. The inventive concept proposes the control device for the electric converter 20 to be modified such that a droop control may be implemented at a higher-level control scheme determining a reverence DC electrolyzing current flow into the DC side 24, which would directly relate to the rotating speed of the rotor 28 of the synchronous machine 30 connected in parallel to the AC side 22.

The following figures show embodiments, how the invention can be easily implemented in an existing control scheme for the electric converter 20.

FIG. 2 shows a schematic diagram showing a first control scheme for the control device 36 of the electric converter 20 of FIG. 1. As can be seen from FIG. 2, the sensor signal 34 is supplied to a droop control 44 processing the sensor signal 34, in order to determine a reference value 46 for AC electric power. This reference value 46 is supplied to a first differentiator 50.

Moreover, a power sensor (not shown) provides a measured value 48 of a current measured AC electric power. The measured value 48 is also supplied to the differentiator 50. A difference between these both values 46, 48 is supplied to a Pl-control 52, which provides a respective signal, which is supplied to a dynamic saturation control 54. As a result, the dynamic saturation control 54 provides a reference value 46 related to a reference value for an AC current or a DC current, respectively. The reference value 56 is supplied to a second differentiator 58.

Moreover, the second differentiator 58 is supplied with a measured value 46 of the AC current or the DC current, respectively, which is provided by a respective current sensor (not shown). The second differentiator 58 provides a difference between the reference value 56 and the measured value 60 to a second PI-control 62 providing, in response, a firing angle signal 64 as an output signal, which can be used as the firing signal for the thyristors of the electric converter 20 of FIG. 1.

As can be seen from FIG. 2, the sensor signal 34 may directly act on determining the firing angles for the thyristors of the electric converter 20. In this regard, an immediate reaction can be achieved.

FIG. 3 shows a schematic diagram showing a second control scheme for a control device 36 of the electric converter 20 of FIG: 1. This second embodiment is based on the first embodiment as detailed with regard to FIG. 2, which is why it is additionally referred to the above statements.

The embodiment of FIG. 3 differs from the embodiment of FIG. 2 by the features that the droop control 44 is not used at the entrance of the regulation scheme, but instead, at the end of the regulation scheme. In this regard, an additional differentiator 66 is provided. Up to the Pl-control 62, the control method corresponds to a reasonable control for determining firing angles for the thyristors of the electric converter 20. However, the output signal 64 of the Pl-control 62 is in this embodiment only preliminary and supplied to the third differentiator 66. Also, the droop control 44 provides its signal to the third differentiator 66. In response of these both signals, the third differentiator 66 provides a firing angle signal 68, which is now used to control the thyristors of the electric converter 20.

With the second embodiment, the same operation as with the first embodiment according to FIG. 2 can be achieved.

Although the invention is described by the embodiments as detailed above, various amendments can be provided without leaving the scope of the inventive concept. Especially, it should be noted that the inventive concept is not bound to electrolyzing of water. Rather, it can generally be applied to any other electrolyzing processes such as, for instance, electrolyzing of carbon dioxide, or the like.

The embodiments described above serve only for further explanation of the invention and shall not be regarded as limiting the scope.

## Claims

1. A method of controlling an electrolyzing plant (10) having plural electrolyzing cells (14), especially configured to electrolyze water by providing an electrolyzing process, wherein the electrolyzing cells (14) perform the electrolyzing process in response to being subjected to a DC electrolyzing power, wherein the electrolyzing plant (10) is supplied with electric power from an electric power network (12), wherein the electric power network (12) deploys an alternating voltage having a basic frequency, wherein an AC side (22) of at least one electric converter (20) of the electrolyzing plant (10) is electrically connected with the electric power network (12) in order to receive the electric power, and a DC side (24) of at least one electric converter (20) provides the DC electrolyzing power in response to the AC side (22) receiving the electric power,
**characterized in that**
a synchronous machine (30) of the electrolyzing plant (10) has a stator winding, wherein the stator winding is connected with the electric power network (12), wherein a rotational speed of a rotor of the synchronous machine (30) is detected by a speed sensor (26) that provides a sensor signal (34) depending on the detected rotational speed, wherein a control device (36) that controls at least an operation of the at least one electric converter (20), receives and processes the sensor signal (34), and the DC electrolyzing power provided by the at least one electric converter (20) is controlled at least dependent on the processed sensor signal (34), in order to control the electrolyzing plant (10).

2. The method according to claim 1, **characterized in that** connecting the stator winding with the electric power network (12) is established by connecting in parallel the stator winding and the AC side (22) of the at least one electric converter (20).

3. The method according to any of the preceding claims, **characterized in that** the at least one electric converter (20) has thyristors for providing a rectifying operation, wherein firing angles of the thyristors are determined at least partially dependent on the sensor signal (34) of the speed sensor (26).

4. The method according to any of the preceding claims, **characterized in that** the at least one electric converter (20) has transistors for providing the rectifying operation, wherein the transistors are operated in a specific PWM-mode, wherein the PWM-mode is determined at least partially dependent on the sensor signal (34) of the speed sensor (26).

5. An electrolyzing plant (10) having
- plural electrolyzing cells (14), especially configured to electrolyze water by providing an electrolyzing process, wherein the electrolyzing cells (14) perform the electrolyzing process in response to be subjected to a DC electrolyzing power,
- a point of connection (18) configured to be connected with an electric power network (12) in order to supply the electrolyzing plant (10) with electric power from the electric power network (12), wherein the electric power network (12) deploys an alternating voltage having a basic frequency,
- at least one electric converter (20) having an AC side (22) electrically connected with the point of connection (18), in order to receive the electric power from the electric power network (12), and a DC side (24) connected with the electrolyzing cells (14), wherein the DC side (24) is configured to provide the electrolyzing cells (14) with the DC electrolyzing power in response to the AC side (22) receiving the electric power,
**characterized by**
- a synchronous machine (30) having a stator winding and a rotor (28), wherein the stator winding is connected with the point of connection (18),
- a speed sensor (26) configured to detect a rotational speed of the rotor (28) of the synchronous machine (30), wherein the speed sensor (26) is configured to provide a sensor signal (34) depending on the detected rotational speed,
- a control device (36) connected with the speed sensor (26), wherein the control device (36) is configured to receive and process the sensor signal (34) and to control an operation of the at least one electric converter (20) such that the DC electrolyzing power provided by the at least one electric converter (20) is controlled at least partially dependent on the processed sensor signal (34), in order to control the electrolyzing plant (10).

6. The electrolyzing plant (10) according to claim 5, **characterized in that** the synchronous machine (30) has a number of pole pairs of at least two.

7. The electrolyzing plant (10) according to any of the preceding claims 5 through 6, **characterized by** a transformer (32) having a primary winding (38) and a secondary winding (40), wherein the primary winding (38) is connected with the point of connection (18), wherein the secondary winding (40) is connected with the at least one electric converter (20) and the stator winding of the synchronous machine (30).

8. The electrolyzing plant (10) according to any of the preceding claims 5 through 7, **characterized in that** the control device is formed integral with the at least one electric converter (20).

9. The electrolyzing plant (10) according to any of the preceding claims 5 through 8, **characterized in that** the at least one electric converter (20) and the stator winding of the synchronous machine (30) are electrically connected in parallel.

10. The electrolyzing plant (10) according to any of the preceding claims 5 through 9, **characterized by** an operating device (42) configured to supply the electrolyzing cells (14) with an agent to be electrolyzed and to discharge at least one product produced in response to electrolyzing the agent, wherein the operating device (42) is configured to control supplying and discharging at least partially dependent on the sensor signal (34).
